# EUROPÄISCHE PATENTSCHRIFT

(11) **EP 4 372 179 B1**
(45) Veröffentlichungstag und Bekanntmachung des Hinweises auf die Patenterteilung: **05.11.2025**
(21) Anmeldenummer: 23200079.4
(22) Anmeldetag: 27.09.2023
(51) Int. Cl.: E04F 15/02, E04F 15/10, E04F 13/08, B32B 21/02, B32B 21/04, B32B 7/12

(54) **BELAGSELEMENT**
COVERING ELEMENT
ÉLÉMENT DE REVÊTEMENT

(30) Priorität: 17.11.2022 DE 102022004252
(43) Veröffentlichungstag der Anmeldung: 22.05.2024
(73) Patentinhaber: Parador GmbH, 48653 Coesfeld (DE)
(72) Erfinder: Petersen, Frank, 48653 Coesfeld (DE); Dekomien, Martina, 45657 Recklinghausen (DE); Holterhaus, Franziska, 48683 Ahaus (DE)
(74) Vertreter: Von Rohr Patentanwälte Partnerschaft mbB

(56) Entgegenhaltungen:
- WO-A2-2011/129755
- DE-A1- 102017 003 640
- US-A1- 2018 283 014

## Beschreibung

Die Erfindung betrifft ein Belagselement für einen Boden-, Wand- und/oder Deckenbelag. Insbesondere betrifft die vorliegende Erfindung ein Laminat-Belagselement bzw. ein Belagselement für einen Laminatboden bzw. Laminatbelag. Das Belagselement weist einen oberen Schichtaufbau sowie eine Trägerplatte auf.

Im Stand der Technik ist es bekannt, dass zur akustischen Dämpfung sogenannte Dämpfungsschichten, die als Trittschall dienen können bzw. zur Trittschalldämmung vorgesehen sind, bereitgestellt werden. Im Stand der Technik ist es ferner bekannt, derartige Dämpfungsschichten als separates Bauteil unterhalb des Belages anzuordnen oder mit der Unterseite des Belagselementes zu verbinden. Beispielsweise kann die Dämpfungsschicht unmittelbar an den Gegenzug des Belagselementes angrenzen. Die Dämpfungsschicht kann darüber hinaus auch zum Ausgleich von Unebenheiten des Untergrundes vorgesehen sein. Eine verbesserte Anordnung bzw. Anpassung des Belagselementes an den Untergrund kann folglich auch über die Dämpfungsschicht ermöglicht werden.

In der Praxis ist jedoch festgestellt worden, dass eine mit dem Belagselement unmittelbar verbundene Dämpfungsschicht, die beispielsweise mit dem Gegenzug stoffschlüssig verbunden ist, nicht die gewünschten Trittschalldämmeigenschaften bereitstellen kann. Hierfür ist es in der Regel zwingend erforderlich, separate Dämmplatten auf dem Untergrund zu verlegen. Auf diese Dämmplatten müssen anschließend die Belagselemente verlegt werden.

Weiterhin ist nachteilig, dass die im Stand der Technik bekannten Laminat-Belagselemente ein hartes Trittgefühl für den Benutzer hervorrufen und sich haptisch vergleichsweise steif bzw. hart anfühlen. Dies schmälert letztlich den Komfort eines Laminatbodens. Ein nachgiebiges Verhalten des Laminat-Bodenbelagselementes kann selbst bei der zusätzlichen Integration einer Dämpfungsschicht nicht bereitgestellt werden.

Aufgabe der vorliegenden Erfindung ist es nun, ein Belagselement der eingangs genannten Art hinsichtlich der Dämpfungseigenschaften und hinsichtlich des Komforts für den Benutzer zu verbessern.

Die vorgenannte Aufgabe wird erfindungsgemäß durch ein Belagselement für einen Boden-, Wand- und/oder Deckenbelag, der bevorzugt aus einer Mehrzahl von Belagselementen zusammengesetzt ist, insbesondere einem Laminat-Belagselement, gelöst, wobei das Belagselement einen oberen Schichtaufbau, eine Stabilitätsschicht, eine Dämpfungsschicht und eine Trägerplatte aufweist. Die Stabilitätsschicht schließt sich rückseitig an den oberen Schichtaufbau an. Die Stabilitätsschicht ist zudem aus Holz und/oder aus einem Holzwerkstoff ausgebildet und/oder besteht aus Holz und/oder aus einem Holzwerkstoff. Die Dämpfungsschicht schließt sich rückseitig an die Stabilitätsschicht an. Die Dämpfungsschicht ist als elastische und/oder akustisch dämpfende Dämpfungsschicht ausgebildet. Die Trägerplatte wiederum schließt sich rückseitig an die Dämpfungsschicht an.

In diesem Zusammenhang versteht es sich, dass zwischen den vorgenannten Schichten auch weitere Schichten angeordnet sein können, jedoch nicht angeordnet sein müssen. Jedenfalls ergibt sich eine Reihenfolge ausgehend von dem oberen Schichtaufbau gemäß der folgenden Struktur:
oberer Schichtaufbau - Stabilitätsschicht - Dämpfungsschicht - Trägerplatte

Somit ist die vorgenannte Verwendung des Begriffs "rückseitig" so zu verstehen, dass dem oberen Schichtaufbau die Oberseite des Belagselementes und der Trägerplatte die Unterseite des Belagselementes zugeordnet ist.

Im Unterschied zum Stand der Technik ist die Dämpfungsschicht erfindungsgemäß nicht unterhalb, sondern oberhalb der Trägerplatte und unterhalb einer Stabilitätsschicht angeordnet.

Beim Zustandekommen der Erfindung ist festgestellt worden, dass durch die Anordnung der Dämpfungsschicht oberhalb der Trägerplatte die akustisch und/oder elastisch dämpfenden Eigenschaften sehr gut bereitgestellt werden können, wobei gleichzeitig ein wahrnehmbarer Komfort bzw. ein nachgiebiges Verhalten bei Belastung des Belagselementes erreicht werden kann, ohne die weiteren, insbesondere mechanischen, Anforderungen an das Belagselement zu beeinträchtigen. Der vorliegende Erfindungsgedanke ist besonders vorteilhaft beim Einsatz für ein Laminat-Belagselement, insbesondere wobei sich bevorzugt geharztes bzw. beharztes Papier nur auf HDF/MDF laminieren lässt, wonach sich eine Einschränkung im Stand der Technik ergibt. Erfindungsgemäß kann nun die Herstellung des Belagselementes in einen Laminierprozess zur Bildung eines Laminates integriert werden.

Würde man jedoch nur die Dämpfungsschicht oberhalb der Trägerplatte anordnen, so würde ein zu starkes Eindrücken bei Belastung hervorgerufen werden. Des Weiteren wäre die Problematik vorhanden, dass die Dämpfungsschicht vergleichsweise einfach beschädigt werden kann und bereits nach kurzer Benutzungszeit dauerhaft eine Reliefstruktur aufgrund der Beanspruchung des Belagselementes entstehen würde.

Diese Nachteile können durch die Verwendung der erfindungsgemäßen Stabilitätsschicht vermieden werden. Bei der Erfindung kommt es also gerade auf die Stabilitätsschicht und die Dämpfungsschicht an. Erfindungsgemäß ist festgestellt worden, dass durch die Anordnung der Stabilitätsschicht oberhalb der Dämpfungsschicht die dämpfenden Eigenschaften und auch der Komfort des Belagselementes verbessert werden können, wobei gleichzeitig auch die Dämpfungsschicht insbesondere vor mechanischen Beanspruchungen geschützt werden kann. Ferner können durch die Stabilitätsschicht auch störende Reliefkonturen, die sonst durch die Beanspruchung der Dämpfungsschicht entstehen würden, vermieden werden. Die Stabilitätsschicht stellt somit sicher, dass an der äußeren Oberfläche des Belagselementes die vorgegebene und gewünschte Struktur vorhanden ist, die bevorzugt nicht oder wenn nur geringfügig bzw. minimal durch eine mechanische Beanspruchung des Belagselementes verändert wird. Gleichzeitig wird aber auch durch die Dämpfungsschicht ein gewisses nachgiebiges Verhalten des Belagselementes hervorgerufen bzw. gewährleistet.

Des Weiteren ist erfindungsgemäß festgestellt worden, dass durch die Ausbildung der Stabilitätsschicht aus Holz und/oder einem Holzwerkstoff die zum Ausgleich der Dämpfungsschicht benötigten Stabilitätseigenschaften optimal erreicht werden können. Durch die Stabilitätsschicht kann bei Beanspruchung eine Lastverteilung erfolgen, was wiederum zu geringeren punktuellen Belastungen der Dämpfungsschicht führt. Demnach führt eine gewährleistete Lastverteilung für die Dämpfungsschicht zu einer großflächigen Belastung, die entsprechend ausgeglichen werden kann, ohne dass punktuelle Lastspitzen vorliegen. Der von dem Benutzer wahrnehmbare Komfort kann dabei aber weiterhin bzw. erst erfindungsgemäß durch die Dämpfungsschicht gewährleistet werden.

Die Ausbildung der Stabilitätsschicht aus Holz und/oder aus einem Holzwerkstoff ist insbesondere so zu verstehen, dass das Material der Stabilitätsschicht aus Holz besteht oder zum großen Teil Holz (das heißt mehr als 50 Gew.-%) aufweist. Sofern die Stabilitätsschicht aus Holzwerkstoff ausgebildet ist, so ist darunter insbesondere eine Ausbildung der Stabilitätsschicht als Hartfaserplatte, wie eine mitteldichte Faserplatte (MDF), hochdichte Faserplatte (HDF), mittelharte Holzfaserplatte (HFM) und harte Holzfaserplatte (HFH), zu verstehen. Solche Holzfaserplatten sind im Stand der Technik bekannt.

Holzfaserplatten bestehen ferner vornehmlich aus Holz. Dabei kann die Stabilitätsschicht wenigstens einen Anteil von Holz von mindestens 70 Gew.-%, vorzugsweise wenigstens 75 Gew.-%, weiter bevorzugt wenigstens 80 Gew.-%, aufweisen. Neben Holz kann die Stabilitätsschicht auch zusätzliches Material, das zur Verstärkung und/oder zum Zusammenhalt der Holzschicht dienen kann, aufweisen. Beispielsweise kann die Stabilitätsschicht auch Wasser, insbesondere durch die Holzfeuchte, und/oder Klebstoff und/oder Harz aufweisen. Der Wasseranteil kann zwischen 1 bis 10 Gew.-%, bevorzugt zwischen 4 bis 6 Gew.-% liegen. Der Klebstoff und/oder Harzanteil kann bis zu 15 Gew.-%, insbesondere bis zu 10 Gew.-%, betragen. Weitere Zusatzstoffe, wie zur Wachsemulsion, können auch vorgesehen sein, diese können dann aber weniger als 1 Gew.-% an dem Material der Stabilitätsschicht ausmachen.

Durch das Material der Stabilitätsschicht ergibt sich insbesondere eine Rohdichte der Stabilitätsschicht zwischen 600 bis 1200 kg/m³, bevorzugt zwischen 600 bis 1000 kg/m³. Besonders bevorzugt ist die Stabilitätsschicht somit als Holzfaserplatte oder als Holzschicht ausgebildet.

Eine Holzfaserplatte kann stark zerkleinertes Holz, wie zuvor erläutert, aufweisen. Unterschiedliche Typen von Holzfaserplatten können sich dabei hinsichtlich ihrer Härte und/oder ihrer Materialdichte voneinander unterscheiden. Faserholz ist nicht gleich Spanholz, selbst wenn diese Produkte als Restprodukt der Sägeindustrie anfallen. Jedoch beinhalten Spanplatten Späne mit einer deutlich höheren Dicke als Holzfaserplatten, die sehr kleine Holzfaserbestandteile enthalten.

Eine Holzfaserplatte kann insbesondere durch eine Verpressung des Materials erreicht werden.

Bei einer besonders bevorzugten Ausführungsform ist das Belagselement polyvinylchloridfrei (PVC-frei) ausgebildet. Eine PVC-freie Ausbildung des Belagselementes ergibt den Vorteil, dass besonders aus ökologischer Sicht ein besonders vorteilhafter Boden erreicht werden kann. PVC-Böden bzw. Belagselemente, die PVC enthalten, sind insbesondere elastische Bodenbeläge. Im Stand der Technik ist es üblich, in PVC-Böden Weichmacher hinzuzufügen. Jedoch sind Weichmacher für die Gesundheit nicht gänzlich unbedenklich, weshalb sich im Hinblick auf die Gesundheit in der Praxis Bedenken für PVC-Böden ergeben. Vorteilhaft ist es also, einen weichmacherfreien oder PVC-freien Boden über weichmacherfreie oder PVC-freie Belagselemente bereitzustellen.

Die vorliegende Erfindung schließt jedoch nicht aus, dass in weiteren alternativen Ausführungsformen das Belagselement zumindest zum Teil Polyvinylchlorid bzw. in geringen Mengen (< 5 Gew.-%) enthält. Insbesondere kann der obere Schichtaufbau PVC enthalten oder daraus bestehen. Erfindungswesentlich ist insbesondere, dass die Stabilitätsschicht aus Holz und/oder einem Holzwerkstoff ausgebildet ist. Dies lässt sich auch mit einem PVC-haltigen oberen Schichtaufbau kombinieren, wobei gleichzeitig die vorgenannten besonders vorteilhaften Eigenschaften des Belagselementes sichergestellt werden können.

Besonders bevorzugt ist, dass die Stabilitätsschicht kunststofffrei oder zumindest im Wesentlichen kunststofffrei ausgebildet ist. Eine kunststofffreie Ausbildung schließt nicht aus, dass die Stabilitätsschicht Klebstoff und/oder Harz enthält, insbesondere wenn dieses nicht aus Kunststoff besteht. Unter einer zumindest im Wesentlichen kunststofffreien Ausbildung der Stabilitätsschicht ist bevorzugt zu verstehen, dass die Stabilitätsschicht einen Kunststoffanteil am Material von weniger als 5 Gew.-%, bevorzugt weniger als 3 Gew.-%, weiter bevorzugt weniger als 1 Gew.-%, aufweist.

Besonders bevorzugt ist, dass die Trägerplatte und/oder das Belagselement randseitig Verbindungsgeometrien, insbesondere Nut-Feder-Verbindungsgeometrien einer Klickverbindung, zur Verbindung benachbarter Belagselemente, bevorzugt zur Bildung eines Belages, aufweist. Dabei kann die Trägerplatte an gegenüberliegenden Randseiten komplementär zueinander ausgebildete Verbindungsgeometrien aufweisen. Beispielsweise können die Längsseiten der Trägerplatte und/oder des Belagselementes komplementär zueinander ausgebildete Verbindungsgeometrien aufweisen, wobei auch die Stirnseiten, die auch als Kopfseiten bezeichnet werden können, auch komplementär zueinander ausgebildete Verbindungsgeometrien aufweisen können. So kann beispielsweise an einer Randseite eine Nut vorgesehen sein, die zum Zusammenwirken mit der komplementär zur Nut ausgebildeten Feder an der gegenüberliegenden Randseite vorgesehen ist, so dass bevorzugt eine Klickverbindung gewährleistet werden kann.

Bei einer weiteren bevorzugten Ausgestaltung des Erfindungsgedankens ist vorgesehen, dass die Stabilitätsschicht eine Dicke zwischen 0,3 bis 5 mm, bevorzugt zwischen 0,5 bis 2 mm, aufweist. In beim Zustandekommen der Erfindung durchgeführten Versuchen ist festgestellt worden, dass bei den vorgenannten Dicken die Stabilitätseigenschaften bei einer aus Holz oder aus einem Holzwerkstoff ausgebildeten Stabilitätsschicht sicher gewährleistet werden können.

Vorzugsweise weist die Dämpfungsschicht eine Dicke bzw. eine Materialstärke zwischen 0,3 bis 5 mm, bevorzugt zwischen 0,5 bis 2 mm, auf. Die Dicken der Dämpfungsschicht und der Stabilitätsschicht können einander entsprechen oder voneinander abweichen. Die Dicken der Stabilitätsschicht und der Dämpfungsschicht sind entsprechend der gewünschten Dämpfungs- und Stabilitätseigenschaften und auch entsprechend des gewünschten wahrnehmbaren Komforts für den Benutzer auszuwählen.

Die Dicke der Trägerplatte kann in Abhängigkeit des Einsatzes des Belagselementes gewählt werden. Besonders bevorzugt ist, wenn die Trägerplatte eine Dicke zwischen 2 mm bis 15 mm, bevorzugt zwischen 4 bis 10 mm, weiter bevorzugt zwischen 6 bis 9 mm, aufweist.

Ferner kann der obere Schichtaufbau eine Dekorschicht und/oder eine oberseitige Verschleißschicht aufweisen. Als Dekorschicht kann insbesondere eine Dekorfolie und/oder ein Dekorpapier und/oder ein Dekordruck und/oder eine dekorative Lackschicht vorgesehen sein. Die oberseitige Verschleißschicht kann als Overlay, insbesondere korundhaltiges Overlay, und/oder als Schutzlack und/oder Schutzöl und/oder als Schutzfolie ausgebildet sein.

Das Overlay kann als Material besonders bevorzugt Polyurethan (PUR) aufweisen und/oder daraus bestehen. Insbesondere ist die Verschleißschicht als PUR aufweisende Overlay-Schutzfolie ausgebildet. PUR ermöglicht eine hohe Schalldämpfung. Somit kann auch die Verschleißschicht durch diese Materialwahl bereits eine dämpfende Wirkung neben der Dämpfungsschicht gewährleisten.

Die Schutzfolie kann insbesondere als Material Polypropylen (PP), Polyethylen (PE) und/oder Polyurethan (PUR) aufweisen. Wie zuvor erläutert, kann auch vorgesehen sein, dass der obere Schichtaufbau auch PVC enthalten kann. Die oberseitige Verschleißschicht kann eine an der Oberseite angeordnete Nutzschicht sein, die bevorzugt beharzt ausgebildet sein kann. Insbesondere kann die oberseitige Verschleißschicht Korundpartikel aufweisen, wodurch sie als Verschleißschicht ausgebildet werden kann. Korund eignet sich insbesondere aufgrund seiner großen Härte. Dadurch können die Korundpartikel einen erhöhten Schutz für das, vorzugsweise beharzte und/oder (durch-)imprägnierte, Dekorpapier gewährleisten.

Vorzugsweise kann der obere Schichtaufbau auch eine Holzfurnier- und/oder eine Holzdeckschicht aufweisen. Die Holzfurnier- und/oder Holzdeckschicht kann aber auch durch eine oberseitige Verschleißschicht abgedeckt und/oder versiegelt und/oder geschützt sein.

In weiteren Ausführungsformen kann auch vorgesehen sein, dass die Stabilitätsschicht als Holzfurnier- und/oder Holzdeckschicht ausgebildet ist und der obere Schichtaufbau eine oberseitig auf der Stabilitätsschicht vorgesehene Versiegelungsschicht und/oder eine oberseitige Verschleißschicht ist, insbesondere wobei dann der obere Schichtaufbau keine Dekorfolie oder Dekorschicht mehr aufweisen muss.

Bei einer weiteren bevorzugten Ausführungsform ist vorgesehen, dass die Stabilitätsschicht, wie zuvor erläutert, als Hartfaserplatte, insbesondere MDF- (mitteldichte Holzfaserplatte) und/oder HDF- (hochdichte Holzfaserplatte) und/oder HFM/MB-(mittelharte Holzfaserplatte / medium hard fiberboard) und/oder HFH/HB-Platte (Hartfaserplatte / hard board), und/oder als Holzschicht, insbesondere aus Pappel oder Linde, ausbildet ist. Materialien der vorgenannten Art gewährleisten insbesondere die erfindungsgemäßen Stabilitätseigenschaften.

Alternativ oder zusätzlich kann vorgesehen sein, dass die Stabilitätsschicht als Formfaserplatte, insbesondere Formnaturfaserplatte, ausgebildet ist. Bei Naturfasern können insbesondere Naturstoffe und/oder recycelte Fasern eingesetzt werden. Besonders bevorzugt weist die als Formfaserplatte ausgebildete Stabilitätsschicht recycelte Werkstoffe, insbesondere Zellulosefasern und/oder landwirtschaftliche Abfälle, auf und/oder besteht daraus. Formfaserplatten der vorgenannten Art eignen sich insbesondere als Ersatz zu MDF und/oder HDF-Platten. Vorzugsweise werden biologisch abbaubare Formfaserplatten verwendet, die demnach in ökologischer Hinsicht besonders vorteilhaft sind. Formnaturfaserplatten für die Stabilitätsschicht können als Material Fasern und/oder Bestandteile ausgewählt aus der Gruppe von alten Zeitungen, Kartonagen und landwirtschaftliche Nebenprodukten, insbesondere Stroh, Bagasse und/oder Tierexkremente, aufweisen. Derart gebildete Formfaserplatten sind beim Einsatz als erfindungsgemäße Stabilitätsschicht vorzugsweise schadstofffrei, hoch belastbar und weisen ein niedriges Gewicht auf.

Die Dämpfungsschicht weist als Material gemäß einer besonders bevorzugten Ausführungsform Kork auf und/oder besteht daraus. Bei dieser Ausführungsform kann vorzugsweise die Dämpfungsschicht eine Rohdichte zwischen 150 bis 550 kg/m³, bevorzugt zwischen 200 bis 300 kg/m³, aufweisen. Zudem kann die Dämpfungsschicht ein Korkkomposit-Material, insbesondere enthaltend Kork und Polypropylen, Polyethylen, Polyurethan und/oder einen elastischen Kunststoff, aufweisen.

Alternativ oder zusätzlich kann in weiteren bevorzugten Ausführungsformen auch vorgesehen sein, dass die Dämpfungsschicht als Material ein Schaumstoffmaterial, bevorzugt ein Kunststoffschaummaterial, aufweist und/oder daraus besteht. Die Schaumstoffrohdichte für die Dämpfungsschicht kann dann wiederum von der gewählten Kunststoffart und der Materialstärke abhängen. Insbesondere kann die Rohdichte bei der Ausbildung der Dämpfungsschicht als Schaumstoffschicht zwischen 100 bis 200 kg/m³, insbesondere für ein Polyethylen aufweisendes Schaumstoffmaterial, und/oder 250 bis 450 kg/m³, insbesondere für ein Polyurethan (PUR) enthaltendes Material, liegen, insbesondere wobei die Dämpfungsschicht für die vorgenannten Rohdichten eine Materialstärke zwischen 0,5 bis 2 mm aufweisen kann. Grundsätzlich kann auch vorgesehen sein, dass das Kunststoff- und/oder Schaumstoffmaterial der Dämpfungsschicht vernetzt sein kann.

Des Weiteren kann die Dämpfungsschicht erfindungsgemäß ein Elastizitätsmodul von höchstens 5 MPa, bevorzugt zwischen 0,2 bis 5 MPa, weiter bevorzugt zwischen 2 bis 4 MPa, aufweisen. Das Elastizitätsmodul wurde insbesondere im Rahmen eines Zugversuches gemessen. Dabei ist das Elastizitätsmodul ein Materialkennwert, der bei linear-elastischem Verhalten den proportionalen Zusammenhang zwischen Spannung und Dehnung bei der Verformung eines festen Körpers beschreibt.

Vorteilhafterweise ist unterseitig der Trägerplatte ein Gegenzug vorgesehen. Der Gegenzug kann insbesondere gewährleisten, dass eine unterwünschte Verformung des Belagselementes vermieden werden kann. Letztlich kann der Gegenzug entstehende Kräfte, die auf die Trägerplatte einwirken, ausgleichen. Somit gleicht der Gegenzug Spannungen in dem Belagselement aus. Im Stand der Technik wird typischerweise ein Gegenzug aus einem Furnier, einem Papier, insbesondere einem Kraftpapier, und/oder aus einer Folie eingesetzt.

Vorzugsweise ist die Trägerplatte als Plattenkörper, insbesondere als Holzplattenkörper, und/oder als HDF- und/oder MDF-Platte und/oder als Plattenkörper aufweisend oder bestehend aus Kunststoff ausgebildet. In weiteren Ausführungsformen kann demnach auch vorgesehen sein, dass die Trägerplatte ein Kunststoffmaterial aufweist und/oder aus Kunststoff besteht.

Darüber hinaus kann bei einer weiteren bevorzugten Ausgestaltung des Erfindungsgedankens vorgesehen sein, dass wenigstens zwei Schichten des Belagselementes und/oder die Dämpfungsschicht, die Trägerplatte, die Stabilitätsschicht und/oder der obere Schichtaufbau miteinander verpresst worden sind, vorzugsweise zur Bildung eines Laminates. Insbesondere kann wenigstens eine Schicht, bevorzugt wenigstens eine Schicht des oberen Schichtaufbaus, vorzugsweise das Dekorpapier, und/oder der Gegenzug, beharzt sein. Als Harz wird insbesondere ein Melaminharz vorgesehen. Besonders bevorzugt ist, wenn die beharzte Schicht zumindest im Wesentlichen vollständig beharzt und/oder durchimprägniert ausgebildet ist.

Insbesondere kann Melaminharz auch weitere Füllstoffe, insbesondere Polyurethan (PUR), enthalten.

Alternativ oder zusätzlich kann vorgesehen sein, dass wenigstens zwei Schichten, bevorzugt alle Schichten, des Belagselementes miteinander verklebt worden sind, insbesondere wobei die Trägerplatte, die Stabilitätsschicht und die Dämpfungsschicht miteinander verklebt sind.

Bei einer besonders bevorzugten Ausgestaltung sind wenigstens zwei Schichten des Belagselementes miteinander verpresst und wenigstens zwei weitere Schichten miteinander verklebt. Besonders vorteilhaft ist es dabei, wenn die Trägerplatte, die Stabilitätsschicht und die Dämpfungsschicht miteinander verklebt sind und wiederum anschließend dieses so gebildete Vorprodukt mit dem, insbesondere beharzten, oberen Schichtaufbau und dem, insbesondere beharzten, Gegenzug verpresst worden ist. Alternativ kann auch vorgesehen sein, dass der Gegenzug und/oder der obere Schichtaufbau mit dem verklebten Vorprodukt kaschiert wird/werden. Besonders bevorzugt ist der Gegenzug vor dem Verpressvorgang mit Melaminharz getränkt worden. Alternativ oder zusätzlich kann bevorzugt vorgesehen sein, dass der obere Schichtaufbau, insbesondere die Dekorschicht, bevorzugt das Dekorpapier, und/oder das Overlay, mit Melaminharz vor dem Verpressvorgang getränkt worden ist/sind.

Die vorgenannten Verfahrensschritte, die später noch im Zusammenhang mit dem erfindungsgemäßen Verfahren diskutiert werden, sind auch als gegenständliche Merkmale zu werten, da diese an dem Endprodukt ersichtlich sind.

Des Weiteren wird die vorgenannte Aufgabe durch ein Verfahren zur Herstellung eines Belagselementes gemäß einer der vorgenannten Ausführungsformen gelöst. Das Verfahren umfasst erfindungsgemäß die folgenden Verfahrensschritte:
A) Bereitstellung einer Trägerplatte und einer Stabilitätsschicht;
B) Verbinden der Trägerplatte mit einer Dämpfungsschicht, vorzugsweise indem die Dämpfungsschicht zumindest mittelbar auf die Trägerplatte extrudiert wird und/oder vorzugsweise indem die Trägerplatte und die Dämpfungsschicht miteinander verpresst und/oder kaschiert werden;
C) Verbinden der Dämpfungsschicht mit der Stabilitätsschicht, vorzugsweise mittels Verpressen und/oder Kaschieren;
D) Verbinden der Stabilitätsschicht mit einem oberen Schichtaufbau, vorzugsweise mittels Verpressen und/oder Kaschieren.

Es versteht sich, dass im Hinblick auf Vorteile und bevorzugte Ausführungsformen des erfindungsgemäßen Verfahrens auf die zuvor diskutierten Vorteile und Ausführungsformen des Belagselementes verwiesen werden darf, die in gleicher Weise auch für das erfindungsgemäße Verfahren gelten können, ohne dass dies einer weiteren expliziten Erwähnung bedarf. Gleichfalls versteht es sich erfindungsgemäß, dass die nachfolgenden Ausführungen zu dem erfindungsgemäßen Verfahren in gleicher Weise auch für das erfindungsgemäße Belagselement gelten können, ohne dass dies einer weiteren expliziten Erwähnung bedarf.

Bei einer bevorzugten Ausführungsform des Verfahrens kann vorgesehen sein, dass die Verfahrensschritte B) und C) und/oder C) und D) zeitgleich durchgeführt werden. Insbesondere können die Schichten des Belagselementes zumindest zeitgleich verpresst und/oder miteinander verklebt und/oder miteinander kaschiert bzw. laminiert werden. Auch die Kombination der Verklebung und der Verpressung der Schichten kann vorgesehen sein, beispielsweise indem einige Schichten miteinander verklebt und zu weiteren Schichten verpresst werden.

Zur Verpressung der Schichten ist vorteilhaft, wenn wenigstens eine Schicht des Belagselementes beharzt ist. Unter einer Beharzung wird im Sinne der vorliegenden Erfindung auch eine zumindest teilweise imprägnierte oder durchimprägnierte Ausbildung der Schicht verstanden.

Erfindungsgemäß kann auch vorgesehen sein, dass zur Verpressung von zwei Schichten zwischen diesen Schichten eine Verbindungsschicht aus Harz, vorzugsweise einem Melaminharz, vorgesehen ist.

Unabhängig davon, ob die Beharzung durch die Beharzung einer Schicht des Belagselementes oder durch eine zusätzliche in dem Belagselement integrierte Verbindungsschicht bereitgestellt wird, ermöglicht ein Verpressvorgang, vorzugsweise in einer Kurztakt (KT)-Pressanlage, dass ein dauerhaftes und sicheres Verbinden der Schichten sichergestellt werden kann.

Sofern eine Verbindungsschicht zur Verbindung von zwei benachbarten Schichten im Rahmen der Verpressung genutzt wird, so wird diese auf die jeweils wenigstens eine Schicht auf der der anderen Schicht zugewandten Seite vor dem Verpressen aufgebracht.

Als Harz für die Verpressung, das in wenigstens einer Schicht bereitgestellt wird, ist insbesondere wenigstens ein aminoplastisches, thermoplastisches oder duroplastisches Harz oder Reaktivharz, insbesondere Melaminharz, vorgesehen. Dabei ist das Harz bevorzugt dadurch gekennzeichnet, dass es unter Temperatur- und Druckeinfluss sich zunächst verflüssigt und dann aushärtet bzw. reagiert. Bei der Aktivierung des Harzes, vorzugsweise der Dekorschicht und/oder des Gegenzugs, dringt das Harz insbesondere in die Poren der benachbarten Schichten ein, so dass eine Penetration in beide Schichten erfolgt und sich hierdurch eine feste Verbindung zur angrenzenden Schicht ergibt.

Ferner kann vorgesehen sein, dass Verbindungsschichten aus einem Harzmaterial zusätzlich zu den zuvor genannten Schichten des Belagselementes eingesetzt werden können. Diese Verbindungsschichten können dann zwischen den zu verpressenden Schichten angeordnet werden. Dabei kann in der Verbindungsschicht dann ein Harz der vorgenannten Art bereitgestellt werden, das bei Verpressung in die angrenzenden Schichten einbringt und diese miteinander stoffschlüssig verbindet.

Die Temperatur beim Verpressen ist im Wesentlichen von dem zu wählenden Harzwerkstoff abhängig. Vorzugsweise erfolgt das Verpressen bei einer Temperatur von größer als 80 °C. Die Presstemperatur bezieht sich auf die Temperatur am Pressblech der Presse. Sie liegt somit an der Oberseite und der Unterseite des Belagselementes an.

Bei duroplastischen Harzen oder Reaktivharzen sind höhere Temperaturen erforderlich, so dass ein Verpressen bei einer Temperatur insbesondere zwischen 180 °C und 210 °C erfolgt. Bei Harzen in Form von Harnstoff-Formaldehyd-Kondensationsprodukten ist das Presstemperaturniveau im Vergleich zu den Reaktivharzen geringer und liegt insbesondere im Bereich zwischen 100 °C und 140 °C. Harnstoff-Formaldehyd-Kondensationsprodukte gehören zur Gruppe der Harnstoffharze und somit auch zu den aminoplastischen Harzen.

Darüber hinaus muss zur Aushärtung der Harzschicht ein ausreichend großer Pressdruck in der Presse vorhanden sein. Als Presse ist insbesondere eine Kurztaktpresse (KT-Presse) vorgesehen. Der Pressdruck ist vorzugsweise größer oder gleich 1000 kPa bzw. 100 N/cm², vorzugsweise größer als 3500 kPa bzw. 350 N/cm².

Vorzugsweise kann der obere Schichtaufbau vor Verbindung mit der Stabilitätsschicht bereitgestellt worden sein oder beim Verbinden mit der Stabilitätsschicht hergestellt werden. Der obere Schichtaufbau kann darüber hinaus auch ein- oder mehrlagig ausgebildet sein. Bei einer mehrlagigen Ausbildung des oberen Schichtaufbaus ist es vorteilhaft, wenn dieser wenigstens eine beharzte Schicht oder eine Verbindungsschicht aus Harz aufweist, insbesondere sofern der obere Schichtaufbau zur anschließenden Verpressung vorgesehen ist.

Bei einer besonders bevorzugten Ausgestaltung des erfindungsgemäßen Verfahrens ist vorgesehen, dass zunächst die Trägerplatte, die Dämpfungsschicht und die Stabilitätsschicht miteinander verklebt werden und anschließend mit dem, insbesondere zumindest teilweise beharzten bzw. imprägnierten, vorzugsweise vollständig beharzten und/oder imprägnierten, oberen Schichtaufbau und optional mit dem, vorzugsweise beharzten und/oder durchimprägnierten, Gegenzug verpresst werden. Alternativ kann vorgesehen sein, dass zunächst die Trägerplatte, die Dämpfungsschicht und die Stabilitätsschicht miteinander verbunden werden und anschließend der obere Schichtaufbau und optional der Gegenzug kaschiert wird/werden.

Bei einer weiteren bevorzugten Alternative kann vorgesehen sein, dass zunächst der, insbesondere beharzte, obere Schichtaufbau mit der Stabilitätsschicht und optional der, vorzugsweise beharzte, Gegenzug mit der Trägerplatte - jeweils separat - verpresst wird und anschließend die Dämpfungsschicht mit der Stabilitätsschicht und der Trägerplatte kaschiert bzw. laminiert wird.

Die vorgenannten Verfahrensausgestaltungen stellen unterschiedliche Möglichkeiten zur Bildung eines Belagselementes vor. In diesem Zusammenhang kann das jeweilige Verfahren entsprechend der Materialien des Belagselementes angepasst werden.

In den vorgenannten Möglichkeiten der Verfahrensausgestaltung zur Herstellung des Belagselementes ist vorgesehen, dass ein sogenanntes Vorprodukt genutzt wird. Gemäß der vorgenannten Ausführungsformen des erfindungsgemäßen Verfahrens wird ein Vorprodukt durch ein Verkleben der Dämpfungsschicht, der Stabilitätsschicht und der Trägerplatte erreicht. Die Bereitstellung eines Vorproduktes ist mit dem Vorteil verknüpft, dass die Herstellung vereinfacht werden kann sowie die Lagerhaltungskosten letztlich gesenkt werden können, da das Vorprodukt mit unterschiedlichen oberen Schichtaufbauten, die beispielsweise unterschiedliche Dekore aufweisen, verbunden werden kann.

Neben dem zuvor angesprochenen Vorprodukt können auch weitere bevorzugte Vorprodukte bereitgestellt werden. Darüber hinaus kann auch mehr als ein Vorprodukt in dem erfindungsgemäßen Verfahren zur Herstellung des Belagselementes bereitgestellt werden.

Besonders bevorzugt kann das Vorprodukt zwischengelagert werden. Bei einer weiteren bevorzugten Ausführungsform kann vorgesehen sein, dass das Vorprodukt durch Verbinden der Dämpfungsschicht, der Stabilitätsschicht und des oberen Schichtaufbaus oder durch Verbinden der Trägerplatte mit der Dämpfungsschicht oder durch Verbinden der Stabilitätsschicht mit dem oberen Schichtaufbau oder durch Verbinden der Trägerplatte, der Dämpfungsschicht und der Stabilitätsschicht gebildet wird. Ein Verbinden der vorgenannten Schichten kann bevorzugt entweder über eine Verklebung und/oder ein Kaschieren und/oder durch ein Verpressvorgang gewährleistet werden.

Bevorzugt ist vorgesehen, dass auf ein Vorprodukt, das durch Verbinden der Trägerplatte, der Dämpfungsschicht und der Stabilitätsschicht gebildet wird, anschließend der obere Schichtaufbau kaschiert und/oder verklebt und/oder gedruckt und/oder lackiert werden kann. Eine Verklebung des oberen Schichtaufbaus mit dem vorgenannten Vorprodukt ist insbesondere bei Trägerplatten bevorzugt, die einen Kunststoff, wie Polyethylen, Polypropylen und/oder PVC, aufweisen und/oder für ein Parkett-Belagselement.

Bei einer weiteren erfindungsgemäßen Ausgestaltung des Verfahrens ist vorgesehen, dass zwei Vorprodukte zur Bildung des Belagselementes bereitgestellt werden. Ein Vorprodukt kann dann durch Verbinden des oberen Schichtaufbaus mit der Stabilitäts- und Dämpfungsschicht bereitgestellt werden, wobei ein weiteres Vorprodukt durch die Trägerplatte und den Gegenzug gebildet werden kann. Beide Vorprodukte können anschließend miteinander verklebt werden.

Darüber hinaus ist gemäß einer weiteren bevorzugten Ausgestaltung vorgesehen, dass nach Verbinden der Schichten des Belagselementes die randseitigen Verbindungsgeometrien in das Belagselement, insbesondere in die Trägerplatte, eingebracht werden. Alternativ kann auch vorgesehen sein, dass die Verbindungsgeometrien bereits in der Trägerplatte vor Verbinden mit den weiteren Schichten zur Bildung des Belagselementes bereitgestellt worden sind.

Des Weiteren wird ausdrücklich darauf hingewiesen, dass alle vorgenannten und nachstehenden Intervalle sämtliche darin enthaltenen Zwischenintervalle und auch Einzelwerte enthalten und diese Zwischenintervalle und Einzelwerte als erfindungswesentlich anzusehen sind, auch wenn diese Zwischenintervalle oder Einzelwerte im Einzelnen nicht konkret angegeben sind.

Es zeigt:
- Fig. 1: einen schematischen Schichtaufbau eines erfindungsgemäßen Belagselementes,
- Fig. 2: einen schematischen Schichtaufbau einer weiteren Ausführungsform eines erfindungsgemäßen Belagselementes,
- Fig. 3: einen schematischen Schichtaufbau einer weiteren Ausführungsform eines erfindungsgemäßen Belagselementes,
- Fig. 4: eine schematische perspektivische Darstellung eines erfindungsgemäßen Belagselementes,
- Fig. 5: eine schematische perspektivische Darstellung eines erfindungsgemäßen Belags,
- Fig. 6: eine schematische Darstellung eines erfindungsgemäßen Verfahrens,
- Fig. 7: eine schematische Darstellung eines erfindungsgemäßen Verfahrensschrittes zur Bildung eines erfindungsgemäßen Vorproduktes,
- Fig. 8: eine schematische Darstellung einer weiteren Ausführungsform eines erfindungsgemäßen Verfahrens,
- Fig. 9: eine schematische Darstellung einer weiteren Ausführungsform eines erfindungsgemäßen Verfahrens und
- Fig. 10: eine schematische Darstellung einer weiteren Ausführungsform eines erfindungsgemäßen Verfahrens.

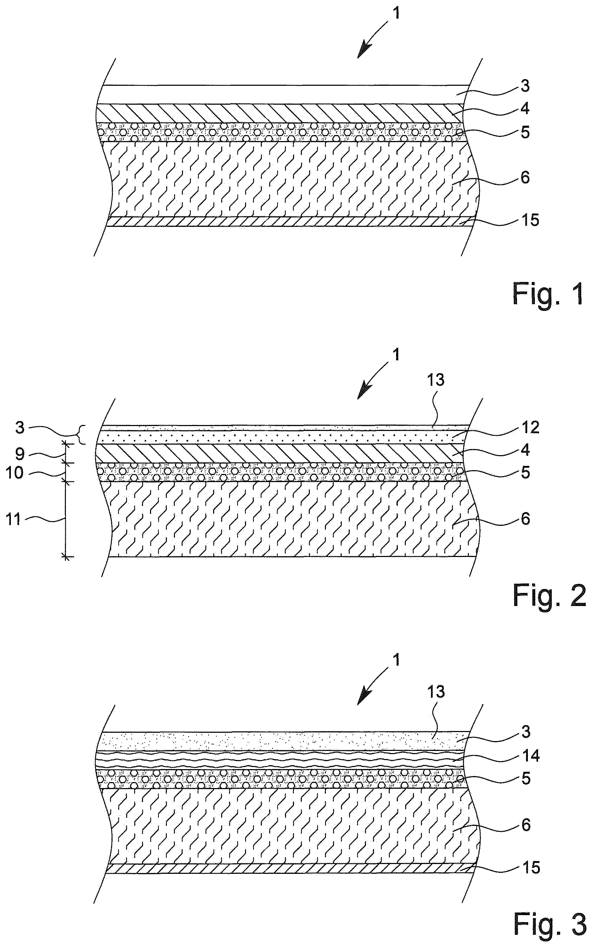

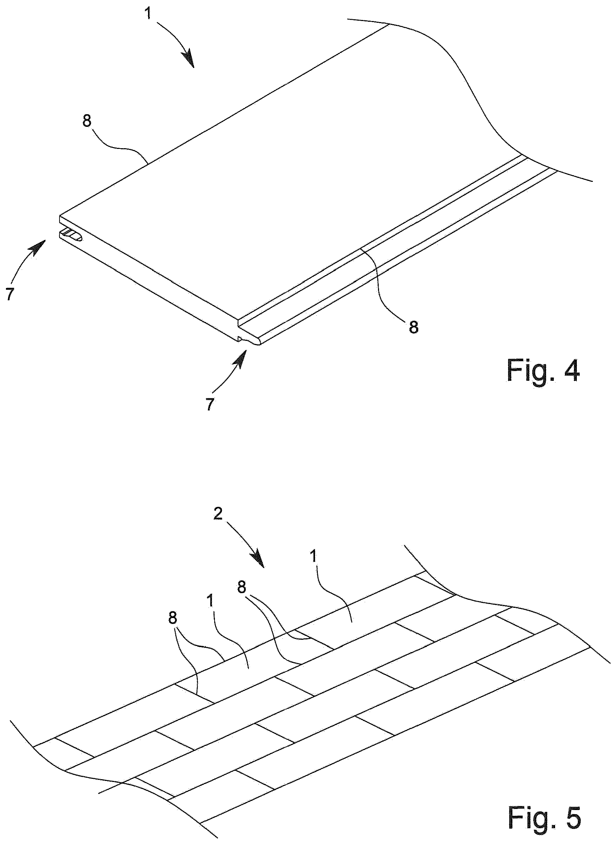

Fig. 1 zeigt einen Schichtaufbau eines Belagselementes 1. Das Belagselement 1 ist zur Verwendung zur Bildung eines Boden-, Wand- und/oder Deckenbelages 2 vorgesehen. Zur Bildung eines Belages 2 können mehrere Belagselemente 1 miteinander verbunden werden. Ein Belag 2 ist schematisch in der Fig. 5 dargestellt. Als Belagselement 1 ist insbesondere ein Laminat-Belagselement vorgesehen.

Fig. 1 zeigt, dass das Belagselement 1 einen oberen Schichtaufbau 3 aufweist. Der obere Schichtaufbau 3 kann einlagig oder mehrlagig ausgebildet sein. An den oberen Schichtaufbau 3 schließt sich rückseitig eine Stabilitätsschicht 4 an. Die Stabilitätsschicht 4 ist aus Holz und/oder aus einem Holzwerkstoff ausgebildet. Wie Fig. 1 zeigt, schließt sich rückseitig an die Stabilitätsschicht 4 eine Dämpfungsschicht 5 an. Die Dämpfungsschicht 5 ist eine elastische und/oder akustisch dämpfende Dämpfungsschicht. An die Dämpfungsschicht 5 wiederum schließt sich rückseitig eine Trägerplatte 6 an. Die Trägerplatte 6 kann als Plattenkörper ausgebildet sein. In dem in Fig. 1 dargestellten Ausführungsbeispiel ist ferner ein Gegenzug 15 vorgesehen, der optional rückseitig der Trägerplatte 6 bereitgestellt werden kann.

Eine mehrlagige Ausbildung des oberen Schichtaufbaus 3 wird unter anderem in der Fig. 2 gezeigt.

Die Stabilitätsschicht 4 besteht zu einem großen Anteil aus Holz, Holzpartikeln und/oder Holzfasern. Insbesondere ist der Materialanteil von Holz, das als zusammenhängendes Holz, Holzpartikel und/oder Holzfasern bereitgestellt werden kann, an der Stabilitätsschicht 4 wenigstens 65 Gew.-%, bevorzugt wenigstens 70 Gew.-%, insbesondere wenigstens 80 Gew.-%.

Die Dämpfungsschicht 5 stellt die dämpfenden Eigenschaften für das Belagselement 1 sicher. Durch die Dämpfungsschicht 5 kann letztlich ein hoher Komfort an der Oberseite des Belagselementes 1 bereitgestellt werden, die letztlich die Nutzseite darstellt. Über die Stabilitätsschicht 4 kann hingegen ein Lastausgleich / eine Lastverteilung bei Belastung des Belagselementes 1 gewährleistet werden, insbesondere wenn mechanische Beanspruchungen auf das Belagselement 1 einwirken, wie beispielsweise das Begehen eines Bodenbelages 2. Durch die Lastverteilung kann letztlich eine lange Einsatzdauer des Belagselementes 1 sichergestellt werden, wobei gleichzeitig auch die dämpfenden Eigenschaften der Dämpfungsschicht 5 in vorteilhafter Weise genutzt werden. Auch schützt die Stabilitätsschicht 4 die Dämpfungsschicht 5 vor weiteren äußeren Einflüssen, so dass die Funktionalität der Dämpfungsschicht 5 über einen langen Einsatzzeitraum gewährleistet werden kann.

Außerdem wird durch die Integration der Dämpfungsschicht 5 in dem Schichtaufbau des Belagselementes 1 der Vorteil erreicht, dass eine separate Bereitstellung einer Dämpfungsschicht 5 unterhalb eines Belages 2 entfallen kann, was den Verlegeaufwand für einen dämpfenden Bodenbelag 2 deutlich reduzieren kann. Das in den Ausführungsformen dargestellte Belagselement 1 kann insbesondere auf eine dem Nutzer bekannte Art und Weise verlegt werden, ohne dass eine weitere spezielle Modifikation bei der Verlegung erforderlich werden würde. Dies reduziert auch Verlegefehler.

Das in Fig. 1 dargestellte Belagselement 1 ist PVC-frei ausgebildet. Das in Fig. 3 dargestellte Belagselement 1 hingegen weist als Material aber auch PVC auf.

Darüber hinaus ist die in Fig. 1 dargestellte Stabilitätsschicht 4 kunststofffrei oder zumindest im Wesentlichen kunststofffrei ausgebildet. Eine kunststofffreie Ausbildung der Stabilitätsschicht 4 schließt nicht aus, dass diese einen Harzanteil oder einen Klebestoffanteil, insbesondere zur Verbindung der Holzfaserbestandteile, aufweisen kann. Bevorzugt beträgt der Kunststoffanteil an dem Material der Stabilitätsschicht weniger als 5 Gew.-%, bevorzugt weniger als 1 Gew.-%, was unter einer kunststofffreien Ausbildung der Stabilitätsschicht 4 zu verstehen ist.

In Fig. 4 ist dargestellt, dass die Trägerplatte 6 und auch das Belagselement 1 an ihren Längsseiten Verbindungsgeometrien 7 aufweist. Nicht näher dargestellt ist, dass diese Verbindungsgeometrien 7 auch an den Kopfseiten bereitgestellt werden können. Insbesondere sind als Verbindungsgeometrien 7 Nut-Feder-Verbindungsgeometrien einer Klickverbindung zur Verbindung benachbarter Belagselemente 1 vorgesehen. Bevorzugt sind die Verbindungsgeometrien 7 an gegenüberliegenden Randseiten 8 der Trägerplatte 6 bzw. des Belagselementes 1 komplementär zueinander ausgebildet. So kann eine Langseite eine Nut und die gegenüberliegende Langseite eine komplementär zur Nut ausgebildete Feder zur Bildung der Klickverbindung aufweisen. Über die Verbindungsgeometrien 7 können letztlich benachbarte Belagselemente 1 miteinander zur Bildung eines Belages 2 verbunden werden, wie dieser schematisch in der Fig. 5 dargestellt ist.

In der Fig. 2 sind unterschiedliche Dicken der einzelnen Schichten des Belagselementes 1 dargestellt. Die in Fig. 2 dargestellte Stabilitätsschicht 4 kann eine Dicke 9 zwischen 0,3 bis 5 mm, insbesondere zwischen 0,5 bis 2 mm, aufweisen. Die Dämpfungsschicht 5 wiederum kann eine Dicke 10 zwischen 0,3 bis 5 mm, insbesondere zwischen 0,5 bis 2 mm, aufweisen. Die Dicken 9, 10 der Stabilitätsschicht 4 und der Dämpfungsschicht 5 können zumindest im Wesentlichen gleich zueinander ausgebildet sein oder sich voneinander unterscheiden.

Darüber hinaus kann die Trägerplatte 6 eine Dicke 11 zwischen 2 bis 15 mm, bevorzugt zwischen 4 bis 10 mm, aufweisen. Die Dicke 11 der Trägerplatte 6 wird in Abhängigkeit der gewünschten Aufbauhöhe bzw. Gesamthöhe des Belagselementes 1 ausgewählt.

In Fig. 2 ist dargestellt, dass der obere Schichtaufbau 3 eine Dekorschicht 12 und eine oberseitige Verschleißschicht 13 aufweist. Nicht näher dargestellt ist, dass der obere Schichtaufbau 3 nur eine Dekorschicht 12 oder nur eine oberseitige Verschleißschicht 13 aufweist. Als Dekorschicht 12 kann eine Dekorfolie, ein Dekorpapier, ein Dekordruck und/oder eine dekorative Lackschicht vorgesehen sein. Als oberseitige Verschleißschicht 13 wiederum kann eine Schutzfolie, ein Overlay und/oder ein Schutzlack und/oder Schutzöl vorgesehen sein. Das Overlay weist insbesondere Korundpartikel auf bzw. ist korundhaltig ausgebildet. Dies erhöht letztlich die Resistenz gegenüber einem Verschleiß.

Nicht näher dargestellt ist, dass das Overlay als Material Polyurethan (PUR) aufweist und/oder daraus besteht. Insbesondere ist die oberseitige Verschleißschicht 13 als Overlay und als Schutzfolie ausgebildet, die als Material PUR aufweist und/oder daraus besteht. Diese Ausbildung der Verschleißschicht 13 gewährleistet ein schalldämpfendes Verhalten der Verschleißschicht 13.

Der obere Schichtaufbau 3 kann eine Holzfurnier- und/oder eine Holzdeckschicht 14 aufweisen. In Fig. 3 ist dargestellt, dass die Stabilitätsschicht 4 als Holzfurnier- und/oder Holzdeckschicht 14 ausgebildet ist. Dann kann die Stabilitätsschicht 4 auch als Teil des oberen Schichtaufbaus 3 angesehen werden. Auf die Holzfurnier- und/oder Holzdeckschicht 14 kann dann ein oberer Schichtaufbau 3 bzw. eine oberseitige Verschleißschicht 13 zum Schutz des Holzes aufgebracht sein, insbesondere eine Beschichtung.

Die in Fig. 2 dargestellte Stabilitätsschicht 4 ist als Hartfaserplatte ausgebildet. In diesem Zusammenhang sind unterschiedliche Hartfaserplatten geeignet, insbesondere eine MDF- und/oder HDF-Platte und/oder eine HFM/MB- und/oder eine HFH/HB-Platte. Alternativ kann auch vorgesehen sein, dass die Stabilitätsschicht 4 als Holzschicht, insbesondere aus Pappel oder Linde, ausgebildet ist. Bei dieser Ausbildung ist besonders bevorzugt, wenn die Stabilitätsschicht 4 als Holzfurnier- und/oder Holzdeckschicht 14, wie zuvor erläutert, ausgebildet ist und insbesondere aus Pappel oder Linde besteht.

Nicht dargestellt ist, dass die Stabilitätsschicht 4 als Formfaserplatte, insbesondere Formnaturfaserplatte, ausgebildet ist. Insbesondere kann die Formfaserplatte als Material Abfallzellulose aufweisen und/oder daraus bestehen. Alternativ oder zusätzlich kann die als Formfaserplatte ausgebildete Stabilitätsschicht 4 recycelte Werkstoffe, insbesondere Zellulosefasern und/oder landwirtschaftliche Abfälle, aufweisen und/oder daraus bestehen. Insbesondere ist die Stabilitätsschicht als flexible, hochdichte sowie komprimierte Formfaserplatte aus Abfallzellulose ausgebildet, die vorzugsweise biologisch abbaubar ist.

Die in Fig. 1 dargestellte Dämpfungsschicht 5 weist als Material Kork und/oder ein Korkkomposit, insbesondere aufweisend Kork und Polypropylen (PP), Polyethylen (PE) und/oder Polyurethan (PUR) und/oder andere elastische Kunststoffe, auf. In weiteren Ausführungsformen kann vorgesehen sein, dass die Dämpfungsschicht 5 ein Schaumstoffmaterial, insbesondere ein Kunststoffschaummaterial, aufweist und/oder daraus besteht. Das Schaumstoffmaterial kann auch vernetzt ausgebildet sein.

Darüber hinaus kann die Dämpfungsschicht ein Elastizitätsmodul von höchstens 5 MPa und insbesondere zwischen 2 bis 4 MPa aufweisen.

Wie zuvor erläutert, ist in Fig. 1 dargestellt, dass unterseitig der Trägerplatte 6 ein Gegenzug 15 angeordnet ist, der letztlich zur Lastverteilung führt. Als Gegenzug 15 kann insbesondere ein Kraftpapier vorgesehen sein. Der Gegenzug 15 kann grundsätzlich ein- aber auch mehrschichtig ausgeführt sein.

Die in den Ausführungsformen dargestellte Trägerplatte 6 ist als Plattenkörper ausgebildet und kann insbesondere als Hartfaserplatte bereitgestellt werden, bevorzugt als HDF- und/oder MDF-Platte. In weiteren, nicht näher dargestellten Ausführungsformen kann die Trägerplatte 6 auch ein Kunststoffmaterial aufweisen oder daraus bestehen.

Die Schichten des Belagselementes 1 können auf unterschiedliche Weise miteinander verbunden werden, was jedoch auch am Endprodukt als solches erkennbar ist.

So können wenigstens zwei Schichten des Belagselementes 1 und/oder die Dämpfungsschicht 5, die Trägerplatte 6, die Stabilitätsschicht 4 und/oder der obere Schichtaufbau 3 miteinander verpresst worden sein. Bei einer Verpressung ist besonders bevorzugt, wenn wenigstens eine Schicht beharzt ausgebildet ist, insbesondere wenigstens eine Schicht des oberen Schichtaufbaus 3 oder des Gegenzugs 15.

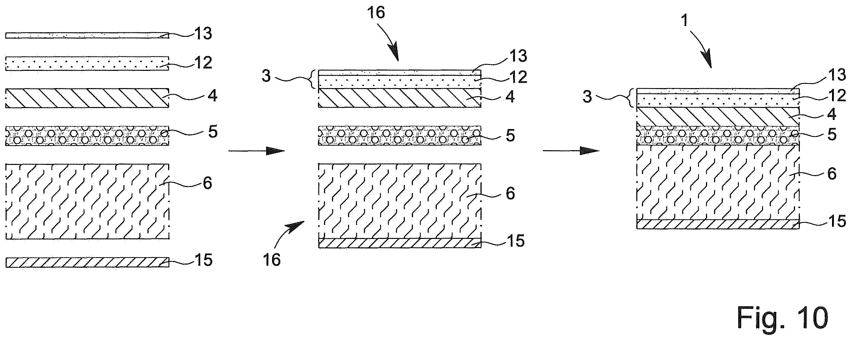

In Fig. 10 ist beispielsweise dargestellt, dass der obere Schichtaufbau 3 mit der Stabilitätsschicht 4 sowie die Trägerplatte 6 mit dem Gegenzug 15 verpresst worden sind, wobei in diesem Zusammenhang der Gegenzug 15 sowie die Dekorschicht 12 beharzt und/oder durchimprägniert ausgebildet sind.

Beim Verpressen kann alternativ auch zwischen den zu verpressenden Schichten eine Harz-Verbindungsschicht angeordnet sein, die beim Verpressen in die benachbarten Schichten dringt und diese fest/stoffschlüssig miteinander verbindet. Als Harz ist bevorzugt Melaminharz vorgesehen.

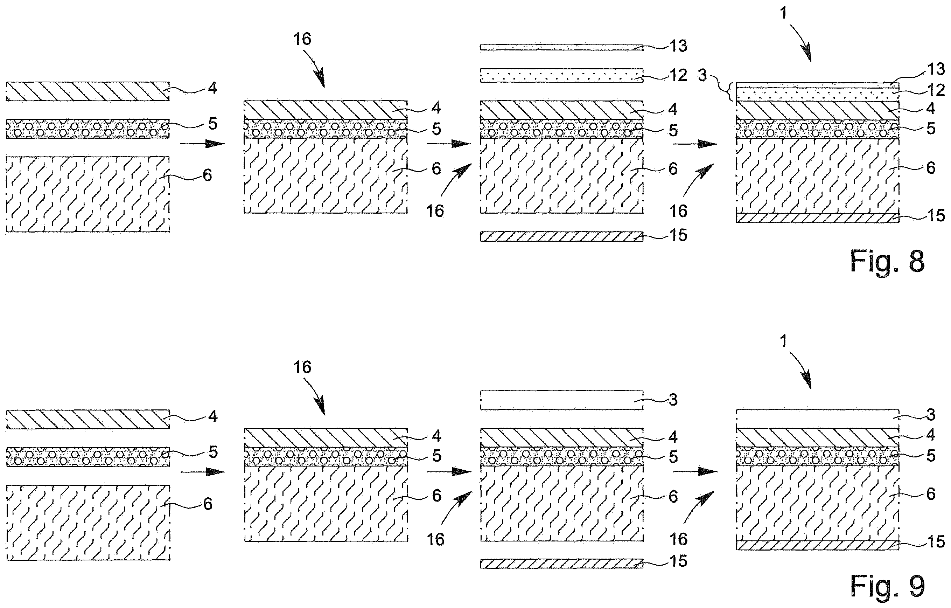

Alternativ oder zusätzlich kann auch vorgesehen sein, dass bevorzugt zwei Schichten, insbesondere alle Schichten, des Belagselementes 1 miteinander verklebt worden sind. Insbesondere können die Trägerplatte 6, die Stabilitätsschicht 4 und die Dämpfungsschicht 5 miteinander verklebt sein, wie dies beispielsweise in Fig. 9 dargestellt ist. Auch kann ein Verkleben der Schichten zu einem Verpressen von anderen Schichten kombiniert werden, wie dies im Zusammenhang mit dem Verfahren ausgeführt werden wird.

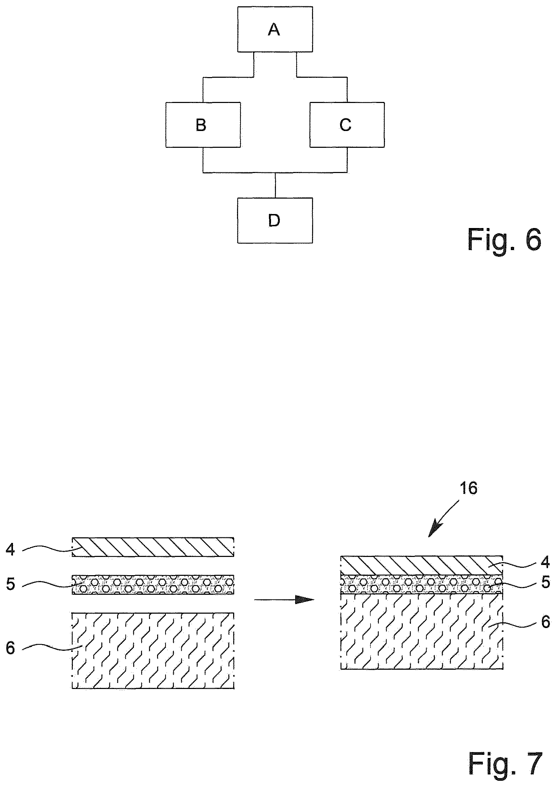

In Fig. 6 ist ein schematischer Ablauf eines Verfahrens zur Herstellung eines Belagselementes 1 nach einem der zuvor beschriebenen Ausführungsformen dargestellt. Das Verfahren umfasst die Schritte A) bis D). Im Schritt A) wird zunächst die Trägerplatte 6 und die Stabilitätsschicht 4 bereitgestellt.

Im Verfahrensschritt B) wird anschließend die Trägerplatte 6 mit einer Dämpfungsschicht 5 verbunden. Ein Verbinden kann beispielsweise über eine Extrusion der Dämpfungsschicht 5 auf die Trägerplatte 6 erfolgen, insbesondere wenn die Dämpfungsschicht 5 als Material Schaumstoff aufweist oder daraus besteht. Alternativ kann vorgesehen sein, dass die Trägerplatte 6 und die Dämpfungsschicht 5 miteinander verpresst und/oder kaschiert werden, wobei bei diesem Verbindungsvorgang auch eine Verbindung zu weiteren Schichten des Belagselementes 1 durchgeführt werden kann.

In dem in Fig. 6 dargestellten Ablauf ist vorgesehen, dass der Verfahrensschritt C) zeitgleich bzw. gleichzeitig zu dem Verfahrensschritt B) durchgeführt wird. Aber auch eine zeitlich unabhängige Durchführung kann in weiteren Ausführungsformen, die nicht näher dargestellt sind, vorgesehen sein. Im Schritt C) wird die Dämpfungsschicht 5 mit der Stabilitätsschicht 4, vorzugsweise mittels Verpressens und/oder Kaschieren, verbunden. Beispielsweise können die Dämpfungsschicht 5, die Stabilitätsschicht 4 und die Trägerplatte 6 zeitgleich miteinander verbunden, insbesondere verklebt, werden.

Im Verfahrensschritt D), der in dem in Fig. 6 dargestellten Ausführungsbeispiel zeitlich nach den Verfahrensschritten B) und C) durchgeführt wird, kann die Stabilitätsschicht 4 mit dem oberen Schichtaufbau 3, vorzugsweise mittels Verpressen und/oder Kaschieren, verbunden werden.

Wie zuvor erläutert, können die Verfahrensschritte B) und C) zeitgleich durchgeführt werden. Nicht näher dargestellt ist, dass auch die Verfahrensschritte C) und D) alternativ oder zusätzlich zeitgleich durchgeführt werden. Ebenfalls nicht näher dargestellt ist, dass die Schichten des Belagselementes 1 zumindest im Wesentlichen zeitgleich miteinander verpresst und/oder miteinander verklebt werden. In den in den Fig. 8 bis 10 dargestellten Ausführungsformen des Verfahrens ist vorgesehen, dass zur Bildung des Belagselementes 1 unterschiedliche Vorprodukte 16 bereitgestellt werden, die durch Verbinden einzelner Schichten des Belagselementes 1 erzeugt werden können, wobei diese Vorprodukte 16 dann zu weiteren Vorprodukten 16 oder Schichten des Belagselementes 1 verbunden werden können.

Der obere Schichtaufbau 3 kann vor Verbindung mit der Stabilitätsschicht 4 bereitgestellt worden sein oder beim Verbinden mit der Stabilitätsschicht 4 hergestellt werden. Sofern der obere Schichtaufbau 3 mehrteilig ausgebildet ist, kann insbesondere bei der Verbindung zu der Stabilitätsschicht 4 der obere Schichtaufbau 3 als solches hergestellt werden.

Ein Vorprodukt 16 kann durch Verbinden unterschiedlicher Schichten des Belagselementes 1 bereitgestellt werden. Ein solches Vorprodukt 16 kann insbesondere vor der Verbindung zu anderen Schichten des Belagselementes 1 zwischengelagert werden. In Fig. 7 ist dargestellt, dass ein Vorprodukt 16 durch Verbinden, insbesondere Verkleben, der Stabilitätsschicht 4, der Dämpfungsschicht 5 und der Trägerplatte 6 erzeugt werden kann.

In Fig. 10 sind wiederum zwei Vorprodukte 16 dargestellt. Dabei kann ein Vorprodukt 16 durch Verbinden des oberen Schichtaufbaus 3 mit der Stabilitätsschicht 4 und ein weiteres Vorprodukt 16 durch Verbinden der Trägerplatte 6 mit dem Gegenzug 15 hergestellt worden sein, insbesondere durch Verpressung.

Nicht näher dargestellt ist, dass auch ein Vorprodukt 16 durch Verbinden der Dämpfungsschicht 5, der Stabilitätsschicht 4 und des oberen Schichtaufbaus 3 oder durch Verbinden der Trägerplatte 6 mit der Dämpfungsschicht 5 bereitgestellt werden kann.

Die Bereitstellung eines Vorproduktes 16 kann insbesondere in Abhängigkeit der jeweiligen Lagerkapazität oder des Herstellungsverfahrens erfolgen.

Darüber hinaus können die Verbindungsgeometrien 7 nach Verbinden des Belagselementes 1 randseitig in die Trägerplatte 6 und/oder in das Belagselement 1 eingebracht werden. Alternativ kann auch vorgesehen sein, dass die Trägerplatte 6 bereits vor Verbindung zu anderen Schichten randseitig die Verbindungsgeometrien 7 aufweisen kann.

In den Fig. 8 bis 10 sind unterschiedliche schematische Darstellungen eines jeweiligen Verfahrens gezeigt.

Fig. 8 zeigt, dass zunächst ein Vorprodukt 16 durch Verbinden der Stabilitätsschicht 4, der Dämpfungsschicht 5 und der Trägerplatte 6 erzeugt werden kann. Diese Schichten können insbesondere über eine Verklebung miteinander verbunden werden. Anschließend wird das Vorprodukt 16 mit dem oberen Schichtaufbau 3 und optional mit dem Gegenzug 15 verpresst, insbesondere in einer KT-Pressanlage. In diesem Zusammenhang ist besonders bevorzugt, wenn der Gegenzug 15 und/oder wenigstens eine Schicht, bevorzugt die Dekorschicht 12, des oberen Schichtaufbaus 3 zumindest teilweise, bevorzugt vollständig, beharzt und/oder durchimprägniert, besonders bevorzugt mit Melaminharz beharzt, imprägniert und/oder getränkt, ist.

Als Harz ist insbesondere ein Melaminharz vorgesehen.

Sofern die Schichten nicht beharzt sind, so wird bevorzugt eine nicht näher dargestellte Verbindungsschicht zwischen den zu verpressenden Schichten angeordnet. Die Verbindungsschicht kann dann als Material Harz, insbesondere Melaminharz, aufweisen und bei der Verpressung in die benachbarten Schichten dringen bzw. diese penetrieren.

In Fig. 8 ist dargestellt, dass der obere Schichtaufbau 3 beim Verpressen gebildet wird und sich aus der oberseitigen Verschleißschicht 13 und der Dekorschicht 12 zusammensetzt.

In Fig. 9 ist dargestellt, dass zunächst das Vorprodukt 16 durch Verbindung, insbesondere Verklebung, der Stabilitätsschicht 4, der Dämpfungsschicht 5 und der Trägerplatte 6 gebildet wird. Anschließend wird der obere Schichtaufbau 3, der ein- oder mehrlagig ausgebildet sein kann, sowie optional der Gegenzug 15 zu diesem Vorprodukt 16 kaschiert bzw. laminiert. Bei einer Kaschierung ist ein Kaschiermittel vorgesehen, dass letztlich eine stoffschlüssige Verbindung gewährleistet. Bei dieser Ausführungsform kann die Trägerplatte 6 als Material Kunststoff aufweisen, muss es jedoch nicht.

In Fig. 10 ist wiederum eine weitere alternative Verfahrensausgestaltung vorgesehen, bei der zunächst zwei Vorprodukte 16 gebildet werden, wobei sich ein Vorprodukt 16 durch einen Verpressvorgang des oberen Schichtaufbaus 3 zu der Stabilitätsschicht 4 zusammensetzen kann, wobei der obere Schichtaufbau 3 insbesondere durch eine Dekorschicht 12 und eine oberseitige Verschleißschicht 13 gebildet werden kann. Das weitere Vorprodukt 16 kann durch Verbinden, insbesondere Verpressen, der Trägerplatte 6 zu dem Gegenzug 15 gebildet werden.

Wie zuvor diskutiert, ist bei einem Verpressvorgang besonders vorteilhaft, wenn wenigstens eine Schicht beharzt bzw. durchimprägniert ausgebildet ist oder eine Verbindungsschicht zwischen den zu verpressenden Schichten aus Harz bereitgestellt wird. Anschließend werden die Vorprodukte 16 zu der Dämpfungsschicht 5 verbunden, vorzugsweise verklebt und/oder kaschiert bzw. laminiert.

Nicht näher dargestellt ist, dass die Dämpfungsschicht 5 auch bereits bei Extrusion auf die Trägerplatte 6 gebildet und anschließend zu weiteren Schichten verklebt, kaschiert und/oder verpresst werden kann.

### Bezugszeichenliste:

- 1: Belagselement
- 2: Belag
- 3: oberer Schichtaufbau
- 4: Stabilitätsschicht
- 5: Dämpfungsschicht
- 6: Trägerplatte
- 7: Verbindungsgeometrien
- 8: Randseite von 1
- 9: Dicke von 4
- 10: Dicke von 5
- 11: Dicke von 6
- 12: Dekorschicht
- 13: Oberseite Verschleißschicht
- 14: Holzdeckschicht/Holzfurnierschicht
- 15: Gegenzug
- 16: Vorprodukt

## Patentansprüche

1. Belagselement (1) für einen Boden-, Wand- und/oder Deckenbelag (2), insbesondere Laminat-Belagselement,
mit einem oberen Schichtaufbau (3), einer sich an den oberen Schichtaufbau (3) rückseitig anschließenden Stabilitätsschicht (4) aus Holz und/oder aus einem Holzwerkstoff, einer sich rückseitig an die Stabilitätsschicht (4) anschließenden elastischen und/oder akustisch dämpfenden Dämpfungsschicht (5) und einer sich rückseitig an die Dämpfungsschicht (5) anschließenden Trägerplatte (6),
wobei das Belagselement (1) PVC-frei ausgebildet ist, **dadurch gekennzeichnet , dass** die Stabilitätsschicht (4) zumindest im Wesentlichen kunststofffrei mit einem Kunststoffanteil am Material von weniger als 3 Gew.-%, bevorzugt weniger als 1 Gew.-%, ausgebildet ist.

2. Belagselement nach Anspruch 1, **dadurch gekennzeichnet, dass** die Stabilitätsschicht (4) kunststofffrei ausgebildet ist.

3. Belagselement nach einem der vorhergehenden Ansprüche, **dadurch gekennzeichnet, dass** die Trägerplatte (6) randseitig Verbindungsgeometrien (7) zur Verbindung benachbarter Belagselemente (1) aufweist.

4. Belagselement nach einem der vorhergehenden Ansprüche, **dadurch gekennzeichnet, dass** die Stabilitätsschicht (4) eine Dicke (9) zwischen 0,3 bis 5 mm, bevorzugt zwischen 0,5 bis 2 mm, aufweist..

5. Belagselement nach einem der vorhergehenden Ansprüche, **dadurch gekennzeichnet, dass** der obere Schichtaufbau (3) eine Dekorschicht (12) und/oder eine oberseitige Verschleißschicht (13) aufweist.

6. Belagselement nach einem der vorhergehenden Ansprüche, **dadurch gekennzeichnet, dass** der obere Schichtaufbau (3) eine Holzfurnierschicht aufweist.

7. Belagselement nach einem der vorhergehenden Ansprüche, **dadurch gekennzeichnet, dass** die Stabilitätsschicht (4) als Hartfaserplatte und/oder als Holzschicht ausgebildet ist und/oder
dass die Stabilitätsschicht (4) als Formfaserplatte ausgebildet ist.

8. Belagselement nach einem der vorhergehenden Ansprüche, **dadurch gekennzeichnet, dass** die Dämpfungsschicht (5) als Material Kork und/oder ein Korkkomposit und/oder ein Schaumstoffmaterial aufweist und/oder daraus besteht und/oder dass die Dämpfungsschicht (5) ein Elastizitätsmodul von höchstens 5 MPa, bevorzugt zwischen 0,2 bis 5 MPa, weiter bevorzugt zwischen 2 bis 4 MPa, aufweist.

9. Belagselement nach einem der vorhergehenden Ansprüche, **dadurch gekennzeichnet, dass** unterseitig der Trägerplatte (6) ein Gegenzug (15) vorgesehen bzw. angeordnet ist.

10. Verfahren zur Herstellung eines Belagselementes (1) nach einem der vorhergehenden Ansprüche, wobei das Verfahren die folgenden Verfahrensschritte umfasst:
A) Bereitstellung einer Trägerplatte (6) und einer Stabilitätsschicht (4);
B) Verbinden der Trägerplatte (6) mit einer Dämpfungsschicht (5), vorzugsweise indem die Dämpfungsschicht (5) zumindest mittelbar auf die Trägerplatte (6) extrudiert wird und/oder vorzugsweise indem die Trägerplatte (6) und die Dämpfungsschicht (5) miteinander verpresst und/oder kaschiert werden;
C) Verbinden der Dämpfungsschicht (5) mit der Stabilitätsschicht (4), vorzugsweise mittels Verpressen und/oder Kaschieren;
D) Verbinden der Stabilitätsschicht (4) mit einem oberen Schichtaufbau (3), vorzugsweise mittels Verpressen und/oder Kaschieren.

11. Verfahren nach Anspruch 10, **dadurch gekennzeichnet, dass** die Verfahrensschritte B) und C) und/oder C) und D) zeitgleich durchgeführt werden.

12. Verfahren nach einem der Ansprüche 10 oder 11, **dadurch gekennzeichnet, dass** der obere Schichtaufbau (3) vor Verbindung mit der Stabilitätsschicht (4) bereitgestellt worden ist oder beim Verbinden mit der Stabilitätsschicht (4) hergestellt wird.

13. Verfahren nach einem der Ansprüche 10-12, **dadurch gekennzeichnet, dass** zunächst die Trägerplatte (6), die Dämpfungsschicht (5) und die Stabilitätsschicht (4) miteinander verklebt werden und anschließend mit dem, insbesondere beharzten, oberen Schichtaufbau (3) und optional dem, vorzugsweise beharzten, Gegenzug (15) verpresst werden oder anschließend der obere Schichtaufbau (3) und optional der Gegenzug (15) kaschiert wird/werden oder
dass zunächst der, insbesondere beharzte, obere Schichtaufbau (3) mit der Stabilitätsschicht (4) und optional der, vorzugsweise beharzte, Gegenzug (15) mit der Trägerplatte (6) verpresst wird und anschließend die Dämpfungsschicht (5) mit der Stabilitätsschicht (4) und der Trägerplatte (6) verklebt wird.

14. Verfahren nach einem der Ansprüche 10-13, **dadurch gekennzeichnet, dass** wenigstens ein Vorprodukt (16) bereitgestellt wird und bevorzugt zwischengelagert wird, wobei das Vorprodukt (16) durch Verbinden der Dämpfungsschicht (5), der Stabilitätsschicht (4) und des oberen Schichtaufbaus (3) oder durch Verbinden der Trägerplatte (6) mit der Dämpfungsschicht (5) oder durch Verbinden der Stabilitätsschicht (4) mit dem oberen Schichtaufbau (3) oder durch Verbinden der Trägerplatte (6), der Dämpfungsschicht (5) und der Stabilitätsschicht (4) gebildet wird.

## Claims

1. Covering element (1) for a floor, wall and/or ceiling covering (2), in particular laminate covering element,
having an upper layer structure (3), a stability layer (4) of wood and/or of a wood-based material adjoining the rear side of the upper layer structure (3), an elastic and/or acoustically damping damping layer (5) adjoining the rear side of the stability layer (4), and a carrier plate (6) adjoining the rear side of the damping layer (5),
wherein the covering element (1) is designed to be PVC-free
**characterized in that**
the stability layer (4) is at least essentially free of plastic, with a plastic content of less than 3% by weight, preferably less than 1% by weight, of the material.

2. Covering element according to claim 1, **characterized in that** the stability layer (4) is designed to be free of plastic.

3. Covering element according to one of the preceding claims, **characterized in that** the carrier plate (6) has connecting geometries (7) on the edge sides for connecting adjacent covering elements (1).

4. Covering element according to one of the preceding claims, **characterized in that** the stability layer (4) has a thickness (9) between 0.3 to 5 mm, preferably between 0.5 to 2 mm.

5. Covering element according to one of the preceding claims, **characterized in that** the upper layer structure (3) comprises a decorative layer (12) and/or an upper wear layer (13).

6. Covering element according to one of the preceding claims, **characterized in that** the upper layer structure (3) comprises a wood veneer layer.

7. Covering element according to one of the preceding claims, **characterized in that** the stability layer (4) is formed as a hard fiberboard and/or as a wood layer and/or that the stability layer (4) is preferably formed as a shaped fibreboard.

8. Covering element according to one of the preceding claims, **characterized in that** the damping layer (5) comprises as material cork and/or a cork composite, and/or a foam material and/or consists thereof and/or
**in that** the damping layer (5) has a modulus of elasticity of at most 5 MPa, preferably between 0.2 and 5 MPa, more preferably between 2 and 4 MPa.

9. Covering element according to one of the preceding claims, **characterized in that** a countermove (15) is provided and/or arranged on the underside of the carrier plate (6).

10. Method for producing a covering element (1) according to any one of the preceding claims, the method comprising the following method steps:
A) Providing a carrier plate (6) and a stability layer (4);
B) Bonding the carrier plate (6) to a damping layer (5), preferably by extruding the damping layer (5) at least indirectly onto the carrier plate (6) and/or preferably by pressing and/or laminating the carrier plate (6) and the damping layer (5) together;
C) Bonding the damping layer (5) to the stability layer (4), preferably by means of pressing and/or laminating;
D) Bonding the stability layer (4) to an upper layer structure (3), preferably by means of pressing and/or laminating.

11. Method according to claim 10, **characterized in that** the method steps B) and C) and/or C) and D) are carried out simultaneously.

12. Method according to any one of claims 10 or 11, **characterized in that** the upper layer structure (3) has been provided before bonding with the stability layer (4) or is produced when bonding with the stability layer (4).

13. Method according to one of the claims 11-12, **characterized in that** first the carrier plate (6), the damping layer (5) and the stability layer (4) are adhered to each other and subsequently pressed with the, in particular resinated, upper layer structure (3) and optionally the, preferably resinated, countermove (15) or subsequently the upper layer structure (3) and optionally the countermove (15) is/are laminated or **in that** first the, in particular resinated, upper layer structure (3) is pressed with the stability layer (4) and optionally the, preferably resinated, countermove (15) is pressed with the carrier plate (6) and then the damping layer (5) is adhered with the stability layer (4) and the carrier plate (6).

14. Method according to one of the claims 10-13, **characterized in that** at least one preproduct (16) is provided and preferably temporarily stored, the preproduct (16) being obtained by bonding the damping layer (5), the stability layer (4) and the upper layer structure (3) or by bonding the carrier plate (6) to the damping layer (5) or by bonding the stability layer (4) to the upper layer structure (3) or by bonding the carrier plate (6), the damping layer (5) and the stability layer (4).

## Revendications

1. Élément de revêtement (1) pour un revêtement de sol, de mur et/ou de plafond (2), en particulier élément de revêtement stratifié,
comprenant une structure de couche supérieure (3), une couche de stabilité (4) en bois et/ou en un matériau à base de bois adjacente à la face arrière de la structure de couche supérieure (3), une couche d'amortissement élastique et/ou acoustique (5) adjacente à la face arrière de la couche de stabilité (4), et une plaque de support (6) adjacente à la face arrière de la couche d'amortissement (5),
dans lequel l'élément de revêtement (1) est conçu pour être exempt de PVC
**caractérisé en ce que**
la couche de stabilité (4) est au moins essentiellement exempte de plastique, avec une teneur en plastique inférieure à 3 % en poids, de préférence inférieure à 1 % en poids, du matériau.

2. Élément de revêtement selon la revendication 1, **caractérisé en ce que** la couche de stabilité (4) est conçue pour être exempte de matière plastique.

3. Élément de revêtement selon l'une des revendications précédentes, **caractérisé en ce que** la plaque de support (6) présente des géométries de raccordement (7) sur les côtés des bords pour raccorder des éléments de recouvrement adjacents (1).

4. Élément de revêtement selon l'une des revendications précédentes, **caractérisé en ce que** la couche de stabilité (4) a une épaisseur (9) comprise entre 0,3 et 5 mm, de préférence entre 0,5 et 2 mm.

5. Élément de revêtement selon l'une des revendications précédentes, **caractérisé en ce que** la structure de couche supérieure (3) comporte une couche décorative (12) et/ou une couche d'usure supérieure (13).

6. Élément de revêtement selon l'une des revendications précédentes, **caractérisé en ce que** la structure de couche supérieure (3) comprend une couche de placage de bois.

7. Élément de revêtement selon l'une des revendications précédentes, **caractérisé en ce que** la couche de stabilité (4) est formée comme un panneau de fibres dur et/ou comme une couche de bois et/ou
**en ce que** la couche de stabilité (4) est de préférence formée comme un panneau de fibres moulé.

8. Élément de revêtement selon l'une des revendications précédentes, **caractérisé en ce que** la couche d'amortissement (5) comprend comme matériau du liège et/ou un composite de liège, et/ou un matériau en mousse et/ou est constituée de ceux-ci et/ou
**en ce que** la couche d'amortissement (5) a un module d'élasticité d'au plus 5 MPa, de préférence entre 0,2 et 5 MPa, plus préférablement entre 2 et 4 MPa.

9. Élément de revêtement selon l'une des revendications précédentes, **caractérisé en ce qu'**un dispositif de contre-mouvement (15) est prévu et/ou disposé sur la face inférieure de la plaque de support (6).

10. Procédé de fabrication d'un élément de revêtement (1) selon l'une des revendications précédentes, le procédé comprenant les étapes suivantes :
A) Fournir une plaque de support (6) et une couche de stabilité (4);
B) Collage de la plaque de support (6) à une couche d'amortissement (5), de préférence par extrusion de la couche d'amortissement (5) au moins indirectement sur la plaque de support (6) et/ou de préférence par pressage et/ou laminage de la plaque de support (6) et de la couche d'amortissement (5) ensemble;
C) Collage de la couche d'amortissement (5) à la couche de stabilité (4), de préférence par pressage et/ou laminage;
D) Collage de la couche de stabilité (4) à une structure de couche supérieure (3), de préférence par pressage et/ou laminage.

11. Procédé selon la revendication 10, **caractérisé en ce que** les étapes B) et C) et/ou C) et D) sont réalisées simultanément.

12. Procédé selon l'une des revendications 10 ou 11, **caractérisé en ce que** la structure de couche supérieure (3) a été prévue avant le collage avec la couche de stabilité (4) ou est produite lors du collage avec la couche de stabilité (4).

13. Procédé selon l'une des revendications10-12,
**caractérisé en ce que**
la plaque de support (6), la couche d'amortissement (5) et la couche de stabilité (4) sont d'abord collées les unes aux autres, puis pressées avec la structure de couche supérieure (3), en particulier résinée, et éventuellement la contre-mouvement (15), de préférence résinée, ou ensuite la structure de couche supérieure (3) et éventuellement la contre-mouvement (15) sont laminées ou
**en ce que** la structure de couche supérieure (3), en particulier résinée, est d'abord pressée avec la couche de stabilité (4) et, le cas échéant, la contre-mouvement (15), de préférence résinée, est pressée avec la plaque de support (6), puis la couche d'amortissement (5) est collée avec la couche de stabilité (4) et la plaque de support (6).

14. Procédé selon l'une des revendications 10-13, **caractérisé en ce qu'**au moins un produit préliminaire (16) est fourni et de préférence stocké temporairement, le produit préliminaire (16) étant obtenu en liant la couche d'amortissement (5), de la couche de stabilité (4) et de la structure de couche supérieure (3) ou par liaison de la plaque de support (6) à la couche d'amortissement (5) ou par liaison de la couche de stabilité (4) à la structure de couche supérieure (3) ou par liaison de la plaque de support (6), de la couche d'amortissement (5) et de la couche de stabilité (4).
